# EUROPEAN PATENT APPLICATION

(11) **EP 4 667 314 A1**
(43) Date of publication of application: **24.12.2025**
(21) Application number: 24182815.1
(22) Date of filing: 18.06.2024
(51) Int. Cl.: B60W 50/00, G06V 20/10, G06V 20/58

(54) **METHOD FOR ADAPTING DRIVING OF A FIRST VEHICLE BASED ON AN INSUFFICIENT VEHICLE LIGHTING OF A SECOND VEHICLE**

(71) Applicant: Volvo Car Corporation, 405 31 Göteborg (SE)
(72) Inventor: PEREZ BARRERA, Oswaldo, 40531 Göteborg (SE); LENNARTSSON, Anders, 40531 Göteorg (SE)
(74) Representative: Maiwald GmbH

(57) **Abstract**

The disclosure relates to a method (100) for adapting driving of a first vehicle (1) based on an insufficient vehicle lighting (4) of a second vehicle (2), the method (100) comprising:
- obtaining data indicative of the vehicle lighting (4) of the second vehicle (4),
- determining that the vehicle lighting (4) of the second vehicle (2) is insufficient based on the data, and
- providing a control instruction for adapting the driving of the first vehicle (1) based on the insufficient vehicle lighting (4) of the second vehicle (2).

## Description

### TECHNICAL FIELD

The present disclosure relates to a method for adapting driving of a first vehicle based on an insufficient vehicle lighting of a second vehicle, a computer program product, a data processing device, and a vehicle.

### BACKGROUND ART

Some vehicles on the road are driving with low performance of their vehicle lighting system, which may comprise one or more of different kinds of vehicle lights, e.g., headlights or, in other words, headlamps, rear lights or, in other words, taillights, and similar. This may happen, inter alia, because drivers of vehicles forget to turn on the vehicle lighting system, a malfunction occurs in the vehicle lighting system or the vehicle lights are covered with mud, snow and/or other material that affects their light output. There are cases of low vehicle lighting performance which can be spotted rather easily by the driver of the vehicle, such as if the front headlamps are off. However, some cases, such as a case where the rear light is not working properly, may be more difficult to spot.

Some modern vehicles include features for detecting vehicle light malfunctions. However, if the driver is distracted or under the influence of drugs or alcohol, the driver may ignore the warnings from the vehicle. Further, while this feature may be available in more recent vehicles, many older vehicles will be on the roads for many more years to come without having this feature. Additionally, the vehicles might detect malfunction in the vehicle lighting system, but the vehicle lighting may be covered with mud, snow and/or other material. This may mean that even if the vehicle lights work properly, their light output might be affected.

Moreover, if a vehicle has low performance of its vehicle lighting, this may not only be dangerous to the vehicle having this low performance, e.g., because the driver may not be able to spot objects in time or generally due to reduced visibility of the vehicle. Other vehicles and their passengers, even in autonomous vehicles, are put at risk as well because these may only detect vehicles with low performance of their vehicle lighting when it is already too late.

### SUMMARY

The problem is at least partially solved or alleviated by the subject matter of the independent claims of the present disclosure, wherein further examples are incorporated in the dependent claims.

According to a first aspect, there is provided a method for adapting driving of a first vehicle based on an insufficient vehicle lighting of a second vehicle, the method comprising:
- obtaining data indicative of the vehicle lighting of the second vehicle,
- determining that the vehicle lighting of the second vehicle is insufficient based on the data, and
- providing a control instruction for adapting the driving of the first vehicle based on the insufficient vehicle lighting of the second vehicle.

Hence, the method provides the advantage for a first vehicle to adapt its driving based on an insufficient vehicle lighting or, in other words, illumination, in particular road illumination, of a second vehicle. For this purpose, the method provides for obtaining data indicative of the vehicle lighting of the second vehicle. This data may be obtained from any detection system or type of the first vehicle, e.g., any sensor system, a camera system, a laser system, a radar system, a LiDAR system, a combination of any two or more of the aforementioned, and similar. Alternatively, or additionally, the data may be obtained by means of wireless transmission or communication from an entity outside or different from the first vehicle, e.g., from another vehicle or any entity connected via Vehicle2X communication with the first vehicle, for example. Based on the data, the vehicle lighting may be determined to be insufficient. Also, the determining that the vehicle lighting of the second vehicle is insufficient based on the data may comprise alternatively determining that the vehicle lighting of the second vehicle is sufficient based on the data. In other words, the determining step of the method may be determining that the vehicle lighting of the second vehicle is insufficient based on the data or that the vehicle lighting of the second vehicle is sufficient based on the data. Merely as an example, the data may be indicative of different lighting parameters, e.g., lighting intensity, lighting size, and similar, which may be compared to one or more thresholds, to determine whether the vehicle lighting is insufficient or not. If the vehicle lighting is determined to be insufficient, the control instruction may be provided for adapting the driving of the vehicle. The control instruction may be a general control instruction in case of insufficient lighting or depend on and/or correlate to a level of insufficiency of vehicle lighting as explained further herein.

The first vehicle may be an ego vehicle, which may carry out the method. For example, the first vehicle may comprise at least partially autonomous capabilities or functions by having one or more systems for autonomous driving. In particular, the second vehicle may be at least partially autonomous controlled. At least partially means that the ego vehicle may be controlled partially or fully autonomously, e.g., by a computer thereof instead of a human driver. Partially means, that one or more systems for autonomous driving may be used, e.g., cruise control, distance keeping assistant, lane keeping assistant, etc. but the human driver may still be required to perform certain actions for driving the ego vehicle, e.g., steering or braking. The second vehicle may be another vehicle. Any of the first vehicle, the second vehicle and any other herein mentioned vehicle may be cars, in particular passenger cars, trucks, and similar road vehicles.

Any of the first vehicle and the second vehicle may comprise a vehicle lighting system. The vehicle lighting system may comprise one or more, in particular multiple, vehicle lights. In particular, the vehicle lighting system may be an exterior lighting system, which may only comprise exterior vehicle lights. Exterior vehicle lights are vehicle lights generating exterior lighting as opposed to interior lighting inside the vehicle. In particular, the vehicle lights may be for illuminating the road and/or signaling the presence of the vehicle or certain driving actions, e.g., a left turn by blinking vehicle lights. For example, the vehicle lighting system of the second vehicle may have headlights and rear lights. The overall vehicle lighting of a vehicle, e.g., the second vehicle, may be provided by all of the vehicle lights of the vehicle lighting system. That is, the vehicle lighting refers to the lighting of the vehicle lighting system (of the second vehicle) under operation (of its vehicle lighting system). However, the data indicative of the vehicle lighting of the second vehicle may be either indicative of the entire or indicative of part of the vehicle lighting of the second vehicle only, e.g., indicative of the vehicle lighting of the rear and/or front of the second vehicle. In other words, the vehicle lighting indicated by the data may be only a portion of the overall vehicle lighting of the second vehicle.

For example, the provision of the control instruction may be to and/or for a system for autonomous driving, the system being of the first vehicle. The control instruction may correspondingly be carried out by such system for autonomously adapting the driving of the first vehicle based on the insufficient vehicle lighting of the second vehicle. As a non-limiting example, the control instruction may be to reduce the speed of the first vehicle or switch lanes and the system of the first vehicle carrying out this control instruction may be a cruise control system and/or lane change system. Alternatively, or additionally, however, the control instruction may be configured as a control instruction to the driver. For example, such control instruction may be displayed to the driver in a cockpit of the vehicle and/or acoustically announced via one or more speakers of the first vehicle. For example, the control instruction may be displayed to the driver in a digital cockpit as text and/or image suggesting reducing the speed and/or switch lanes. Hence, in addition to or alternative to at least partially autonomously adapting of the driving of the vehicle, a human driver of the first vehicle may react based on the determined insufficient vehicle lighting.

The method of the first aspect may in particular be a computer implemented method. This means that at least one, multiple or all of the steps of the method may be carried out by one or more computers or computing units. Different steps may be carried out by the same or by different computers. A computer is herein understood as a data processing device apparatus, which can carry out the steps as defined by the method. The one or more computers or data processing apparatuses may be configured as or provided inside of one more control units of the vehicle.

The data may be further indicative of a travel direction of the second vehicle and/or a driving operation, in particular a turning operation, of the second vehicle. Such travel direction and/or driving operation may be considered for determining whether the vehicle lighting of the second vehicle is insufficient or not. Specifically, when the second vehicle is turning, e.g., towards the first vehicle, the vehicle lighting of the second vehicle, e.g., from the headlights of the second vehicle, may be oriented towards the first vehicle. Hence, the first vehicle may experience the vehicle lighting of the second vehicle differently, in particular based one or more images of the second vehicle taken by a camera of the first vehicle as described herein. Thereby, the accuracy with which the insufficiency of the vehicle lighting of the second vehicle may depend on the orientation, location and/or movement of the second vehicle relative to the first vehicle as may be indicated by the data through the travel direction and/or driving operation of the second vehicle. Specifically, a confidence degree for the determination of the insufficient vehicle lighting may be assigned when determining that the vehicle lighting is insufficient, e.g., based on the travel direction and/or driving operation of the second vehicle. Moreover, other factors may be considered for the determination of the confidence degree or score, e.g., whether the vehicle lighting of the second vehicle is directly oriented towards the first vehicle, or indirectly, e.g., in case of the vehicle lighting determination being based on road illumination by the vehicle lighting of the second vehicle as further described herein. Specifically, for direct and/or frontal vehicle lighting, the confidence degree of insufficiency of the vehicle lighting may be higher than for indirect and/or partial vehicle lighting due to a turning operation of the second vehicle, for example. Similarly, for a high light environment, e.g., in an illuminated tunnel, the confidence degree may generally be less than outside of the tunnel for determining insufficient vehicle lighting of the second vehicle. Here, the method may be repeated or carried out outside of the tunnel to increase the confidence degree with which insufficiency of vehicle lighting may be determined. For example, the turning operation may be a turning at a crossing, following a curved road, or similar. For determining the travel direction and/or driving operation of the second vehicle, the method may comprise determining the travel direction of the second vehicle and comparing it with the travel direction of the first vehicle. Another option for determining the travel direction and/or driving operation of the second vehicle may be determining the location of the second vehicle with respect to the first vehicle and comparing it to GPS information indicative of the road of the first vehicle and/or second vehicle, e.g., whether it is curved or has a crossing. Yet another option for determining the travel direction and/or driving operation of the second vehicle may comprise using computer vision to detect at least a part of the second vehicle and determine how the first vehicle is driving relative to the ego vehicle, for example by detecting a side part of the second vehicle and determining a parallel driving of the first vehicle relative to the second vehicle.

In an example, the data may be comprising one or more images of the second vehicle. Further, the determination of the insufficient vehicle lighting may be based on computer vision. The one or more images may be captured by a camera system of the first vehicle, which may comprise one or more camera units. The one or more images may also be video. Computer vision is a technique by means of which the information contained in the one or more images of the second vehicle, e.g., using artificial intelligence, can be extracted into understandable information, e.g., numerical and/or symbolic information, and used for a specific purpose. For example, based on computer vision, the information about a number, types of vehicle lights and/or vehicle lighting parameters, such as light intensity, may be extracted from images of the rear side of a second vehicle, which the first vehicle may be approaching. Also, by means of computer vision, it may be determined how the second vehicle is positioned relative to the first vehicle, in particular to its camera system or, in other words, which perspective of the second vehicle the one or more images are showing, e.g., a front, rear or side perspective of the second vehicle. Hence, it may be derived that the first vehicle is driving in front of the second vehicle, the one or more images thus showing the rear vehicle lighting of the second vehicle as may be detected by a rear camera of the first vehicle. Alternatively, the first vehicle may be driving behind the second vehicle, approaching the second vehicle or positioned to the side of the second vehicle, e.g., in an overtaking maneuver, whereby the expected vehicle lighting, e.g., in terms of one or more thresholds of the second vehicle may be determined. In addition to, or alternatively to computer vision, the first vehicle may be using other sensor systems such as a radar system and/or a LiDAR system, to determine the position of the first vehicle relative to the second vehicle and thereby the vehicle lighting of the second vehicle shown in the one or more images. For example, the computer vision may be used to detect pixels in the image representing the vehicle lighting. At dark, theses pixels may be typically determined as the brightest pixels in the image. This information may be made understandable to a computer in terms of e.g., quantifying the light intensity by numbers, the number of vehicle lights and/or locating the vehicle lights, for example. Accordingly, the determination may make use of this understandable information derived based on computer vision and as previously explained, for example, compare it to one or more thresholds. The one or more thresholds may for example indicate the number of vehicle lights that are expected to be illuminated at the rear of the second vehicle, the expected light intensity of these vehicle lights, and similar. If, for example, the expected number of vehicle lights is two on the rear of the vehicle, and the information derived based on computer vision is that only one vehicle light is illuminated, then it may be determined that the vehicle lighting is insufficient because one vehicle light is apparently not illuminated. Similarly, when an expected lighting intensity as threshold is not met by the one or more vehicle lights at the rear of the second vehicle, it may be determined that the vehicle lighting is insufficient.

In an example, the determining of the insufficient vehicle lighting may be comprising determining a level of insufficiency of the vehicle lighting. Further, an extent of the adapting of the driving of the first vehicle may be based on the level of insufficiency of the vehicle lighting of the second vehicle. Hence, the extent, e.g., the severity of a driving action, such as braking, and/or the selection of the driving action, e.g., lane change or braking, of the adapting of the driving can be based on a level of insufficiency of the vehicle lighting of the other vehicle, e.g., one vehicle light or lamp working only at 80% or 10% of a light intensity expected or required per threshold. For example, which driving action is selected, may depend on the level of insufficiency of the vehicle as determined. For example, in case the level of insufficiency of the vehicle lighting is very high, e.g., no, or almost no vehicle lighting of the rear of the second vehicle, the corresponding driving action may be strong braking or a selection of braking rather than a lane change for overtaking the second vehicle by the first vehicle. However, in case the level of insufficiency of the vehicle lighting is rather low, e.g., both vehicle lights at the rear of the second vehicle are working but with lower-than-expected lighting intensity, the corresponding driving action may be to overtake the vehicle by changing lanes and accelerating. Generally, the level of insufficiency of the vehicle lighting may be dependent on the number of vehicle lights being illuminated on the second vehicle, whether the vehicle lights are faint or not, e.g., due to dirt covering them, whether the vehicle lights are blinking or not, and other cases.

In an example, the level of insufficiency of the vehicle lighting may be relating to a lighting intensity of the vehicle lighting, and the extent of the adapting of the driving relating to a selection of one or more driving actions from a number of different driving actions and/or selection of a severity of the driving action. For example, the lighting intensity or, in other words, the illumination intensity may be 0 to 100% as defined by a threshold, which may be used for the determination that the vehicle lighting is insufficient or sufficient. At 0%, the vehicle lights, e.g., the headlamps or rear lights, may be off, while at 100% they are working and sufficient as per the threshold, i.e., as expected and not associated with a malfunction or being covered by dirt, snow, or similar. The driving action may be selected from, for example, decelerating, stopping, braking, accelerating, lane change, overtaking, and similar. The severity of the driving action may for example relate to how strong the deceleration or braking or acceleration is applied or how quickly the stopping, lane change or overtaking maneuver is performed by the first vehicle.

In an example, the data may be indicative of a road illumination by the vehicle lighting of the second vehicle, the insufficient vehicle lighting being determined based on the road illumination by the vehicle lighting of the second vehicle. For example, the one or more images may show bright pixels at different spots in a dark environment. For example, two spots may relate to the headlights of the second vehicle, while another, potentially even larger spot, may relate to a reflection of the light from the headlights on the road, i.e., be road illumination. For example, based on the understanding that the second vehicle is driving towards the first vehicle on an opposite lane, the method or first vehicle may understand, in particular based on computer vision, that the brightest spot is a road illumination from the headlights of the second vehicle. Hence, the data may be indicative of the road illumination by the vehicle lighting of the second vehicle. Then, determining the insufficient vehicle lighting based on the road illumination may be useful because it may be larger than the actual vehicle lighting from the vehicle lights, thereby allowing to more accurately determining whether the vehicle lighting is insufficient or not. Also, depending on the position of the first vehicle, in particular its camera system, relative to the second vehicle, some of the vehicle lighting may not be directly seen on the one or more images, for example. Hence, using the road illumination for determining whether the vehicle lighting is insufficient or not may not only help to increase the accuracy of the method but also allow to perform the method in cases in which the vehicle lighting as such is partially not seen on the image. Also, it may be provided that the method or first vehicle compares the road illumination by the vehicle lighting of the second vehicle with vehicle lighting of a one or more other vehicles to determine whether one of these vehicles has insufficient vehicle lighting. In other words, data being indicative of a road illumination by vehicle lightings of different vehicles may be compared to each other for determining the insufficient vehicle lighting. For example, the light pattern of the road illumination may be different depending on the road material, the road being wet, the road being icy, and similar. In such cases, a predefined threshold for determining the vehicle lighting insufficiency based on road illumination may not be accurate for all situations. However, comparing the data indicative of road illumination from different vehicle lightings of different vehicles, may help to increase the accuracy of determining insufficient vehicle lighting of a vehicle.

In an example, the insufficient vehicle lighting may be determined based on a comparison of the lighting intensity and/or lighting area of vehicle lights of the same kind with one another, the vehicle lights of the same kind being from the vehicle lighting of the second vehicle. Accordingly, for example, instead of using thresholds for expected lighting intensity and/or lighting area of vehicle lighting of the second vehicle, in particular predetermined or predefined thresholds, a comparison may be made based on the actual vehicle lighting of the second vehicle as indicated by the data, wherein the lighting intensity and/or lighting area of one vehicle light serves as a threshold for the respective other vehicle light of the same kind. For example, in case of the headlights of a vehicle, when the brightest spots in the one or more images are sized equally and/or have the same intensity or density of bright pixels on the right front side and on the left front side of the vehicle, it may be determined that the vehicle lighting is sufficient. However, if they deviate sufficiently, e.g., by 50% or more in their size, depending on a threshold of deviation, e.g., 50% or more of the size of bright pixels in the one or more images, or if one of the vehicle lights is not at all detected, it may be determined that one vehicle light is malfunctioning, i.e., the vehicle lighting of the second vehicle is insufficient. For detecting lights of the same kind, it may be assumed that vehicle lights are provided symmetrically in vehicles, in particular the headlights and/or rear lights. For example, for the front and the rear of the vehicle, the headlamps and rear lights are generally arranged symmetrically to a center line in the front and rear, i.e., to the right and the left.

In an example, the data may be indicative of different lighting operations and/or a continuous operation of the vehicle lighting of the second vehicle, the vehicle lighting of the second vehicle being determined insufficient if the vehicle lighting is indicative of a malfunction in any of the different lighting operations and/or if an intensity of the vehicle lighting varies during the continuous operation. Typically, the same vehicle lights or vehicle lights on the same part or side of the vehicle, e.g., front or rear, may have a lighting with different lighting operations, which are herein understood as ways or operations of one or more specific vehicle light to generate the vehicle light or, in other words, illumination. For example, the left and right rear lights may have a lighting operation in which they are on, in which they are signaling braking of the vehicle, in which they are signaling reversing of the vehicle, in which one of the vehicle lights is blinking for a left or right turn and in which two or more vehicle lights may be blinking for signaling hazard warning. When detecting the different light operations for a certain time, the method may be able to determine that in any one of the different lighting operations, a malfunction is present because that lighting operation, e.g., for braking, does not work properly, while during other operations, e.g., blinking, the vehicle lighting works properly, for example. Alternatively, or additionally, for example, when the vehicle lighting is continuously operated, e.g., in the case of headlights being operated, the different headlamps, i.e., right and left, having different intensity from one another or varying intensity over time may be determined and thus insufficiency of the vehicle lighting may be determined.

In an example, the method may be further comprising providing a signal indicative of the insufficient vehicle lighting for transmission to the second vehicle, a server and/or other road users. For example, if the insufficiency of the vehicle lighting is based on a determination that a vehicle light of the second vehicle is not generating vehicle lighting, e.g., off or not working due to a malfunction, other entities, such as the second vehicle, a server, in particular cloud server, and/or other road users, such as other vehicles or pedestrians with user devices such as smartphones, in the area may be notified. In particular, a Vehicle2Vehicle or Vehicle2X Communication may be used for the transmission of this signal, which may be in the form of data, e.g., a message, to be processed by the receiving entity, e.g., by displaying its information. The signal may include one or more images of the second vehicle, in particular showing the insufficient vehicle lighting of the second vehicle. Also, there is an option of performing a detection by the first vehicle of the license plate of the second vehicle, for which the one or more images of the second vehicle may be used. The signal may be sent together with the detected license plate from the first vehicle to a server, which may send the signal to the second vehicle. Also, if the second vehicle does not have a communication means for establishing Vehicle2Vehicle communication, the first vehicle may transmit the signal to a user or electronic device inside the second vehicle, e.g., via a server or directly, e.g., through short-range communication such as Bluetooth or Wi-Fi. The user or electronic device, if connected or paired to the second vehicle, in particular an infotainment system thereof, may forward the signal to the second vehicle, which may then be displayed, e.g., as a notification such as "Attention: Your rear lights are turned off", or similar and depending on the insufficiency of the vehicle lighting. Further, together with the signal, a speed, direction and/or location of the first vehicle and/or the second vehicle may be transmitted. In case the signal has been received by the second vehicle, a confirmation may be sent to the first vehicle. The first vehicle may then keep tracking the second vehicle, i.e., repeat obtaining data indicative of the vehicle lighting and determine whether the vehicle lighting of the second vehicle is insufficient or not based on the data, until the insufficiency of the vehicle lighting is resolved, e.g., the driver of the second vehicle switches on the rear lights. If the signal should not be transmitted to the second vehicle, e.g., because it has no communication means for Vehicle2Vehicle communication or no confirmation is received by a user device, the first vehicle may transmit a signal or report about the insufficiency of the vehicle light to other road users and/or to the server such that other road users are informed about the potentially dangerous situation. Also, it may be possible that the first vehicle obtains data indicative of the vehicle lighting of the second vehicle from other road users, such as other vehicles, in addition to or alternatively to the data it may detect on its own. For example, the other road users may share the data comprising one or more images showing the second vehicle from a perspective which the first vehicle cannot see. Alternatively, or additionally, the other road users may directly share information about the vehicle lighting of the second vehicle, e.g., that lights are off or working properly. For example, if the first vehicle is driving in front of the second vehicle, it may not necessarily be able to determine the vehicle lighting of the rear of the second vehicle. For this purpose, it may obtain data indicative of the vehicle lighting of the second vehicle or vehicle lighting insufficiency or sufficiency from another vehicle driving behind the second vehicle and consequently perform the determination of whether the vehicle lighting is insufficient for the rear, front or both of the second vehicle and potentially provide a corresponding control instruction.

In an example, the method may be further comprising providing a second control instruction for at least partially adapting a vehicle lighting of the first vehicle and/or for emitting a first vehicle sound based on the insufficient vehicle lighting of the second vehicle. The adapted vehicle lighting of the first vehicle may be an increased or specific lighting operation of any one of the vehicle lights of the first vehicle, e.g., in the form of hazard warning operation of the vehicle lights and/or an increased or high intensity of the vehicle lighting, e.g., by turning on a high beam. Thereby, the first vehicle may for example notify an approaching second vehicle about insufficient vehicle lighting of the front of the second vehicle, e.g., due to the headlamps not being turned on. However, the first vehicle may notify not only the second vehicle about a potentially dangerous situation due to the insufficient vehicle lighting of the second vehicle, but also other road users, such as pedestrians, and/or increase the visibility of other road users, such as pedestrians, to the second vehicle in case its vehicle lighting could be insufficient to make the driver of the second vehicle aware of the other road user. Additionally, the first vehicle may transmit, via the mentioned Vehicle2Vehicle or Vehicle2X communication a notification about the detected road user, who may be in danger, to the second vehicle or a user or electronic device therein, which may be provided with more information, such as the road user being a pedestrian and the distance of the second vehicle to the pedestrian, for example.

In an example, the method may be further comprising determining different types and/or locations of vehicle lights of the vehicle lighting of the second vehicle based on the data, the different types and/or locations of vehicle lights being classified as having a different relevance for traffic safety. Further, the insufficiency of the vehicle lighting of the second vehicle may be determined separately for each one of the different types of vehicle lights, and an extent of the adapting of the driving of the first vehicle may be based on the insufficiency of each one of the different types of vehicle lights and the classification of the different types and/or locations of the vehicle lights. The different types of vehicle lights may be for example right, left and center rear lights, license plate lights, right and left headlights, and fog lights, each one of which may serve a different function or purpose. Further, or alternatively, each one of these vehicle lights may not or not only be of a different type but vary in location at the vehicle. For example, the right and left rear vehicle may be of the same type but one of them will be on the right of the rear and the other one will be on the left of the rear. Based on the determination of the different types and/or locations of the vehicle lights, the vehicle lights may be classified with a different relevance for traffic safety. For example, if it is determined that a license plate lighting shows insufficient lighting, the license plate lighting may be classified with low or no relevance for traffic safety. Hence, the extend of adapting of the driving of the first vehicle may be very small or none, especially if the other vehicle lights, which are classified with a high relevance for traffic safety, are sufficient in their vehicle lighting. Hence, the driving of the first vehicle may be adapted corresponding to the potential danger from the insufficient vehicle lighting of the first vehicle.

In an example, the method may be further comprising:
- determining a vehicle model of the second vehicle, and
- determining a specification of the vehicle lighting for the determined vehicle model, the determining that the vehicle lighting of the second vehicle is insufficient being based on the data and the determined specification of the vehicle model.
Hence, the first vehicle may perform a vehicle model recognition, which may be used to increase the accuracy with which an insufficient vehicle lighting may be determined. That is, based on the recognized vehicle model of the second vehicle, the first vehicle may determine the specification of the vehicle lighting, e.g., where the vehicle lights are located on the vehicle, how many they are, what their light color and intensity should be under normal operation, what their function is, etc. The specification of the vehicle lighting may be used for the threshold as explained herein, i.e., to compare it to the actual situation of the vehicle lighting based on the data and thereby more accurately determine whether the vehicle lighting of the second vehicle is insufficient or not.

In an example, the method may be further comprising:
- determining a darkness level of the environment of the first vehicle, and
- determining a participation of the second vehicle in road traffic,
   the data being obtained if the determined darkness level meets a darkness threshold and the second vehicle is determined to participate in the road traffic.
For example, two, three, four or more darkness levels may be distinguished from one another. For example, there may be four darkness levels which may be categorized as sunrise, civil dawn, nautical dawn, and astronomical dawn. Besides that, a temporary darkness can be the result of the environment, e.g., driving under a bridge or through a tunnel. The darkness level may be determined by the first vehicle by different means, such as a light or ambient sensor, a photodector, a GPS and/or time unit, an infrared sensor and/or a camera system. If a certain darkness threshold is met, it may be expected from the first vehicle that a certain vehicle lighting is being used by the second vehicle, e.g., the headlights must be turned on. Further, it may be important to recognize that the second vehicle is actually participating in the road traffic rather than just being parked, for example, in which case determining its sufficiency or insufficiency of vehicle lighting may be unnecessary and could be unreasonable, e.g., when passing a row of parked vehicles and determining insufficient vehicle lighting for all of these parked vehicles. For example, the method may determine the participation of the second vehicle in road traffic if the second vehicle is driving behind or ahead of the first vehicle or is approaching the first vehicle from an opposite lane or is driving in a parallel lane. Also, the first vehicle may be able to determine whether the second vehicle is participating in road traffic based on other information, such as for example traffic lights requiring the second vehicle to stop, meaning that it is participating in road traffic despite not moving.

In another example, the method may also be configured to detect whether a second vehicle has just started moving and give a tolerance of a couple seconds before providing the control instruction or determining the sufficiency of insufficiency of the vehicle lighting, thereby allowing to see if the driver switches on the vehicle lighting or not within this time.

In another example, the method may comprise differentiating the vehicle lights depending on their colors as may be shown in the one or more images. When processing the one or more images, in particular based on computer vision, the different colors and thereby the vehicle lights may be filtered by their relevance or importance for traffic safety, which may be taken into account for determining whether the vehicle lighting is sufficient or not.

In another example, the method may comprise estimating the time of a darkness situation. For example, if the darkness is only temporary due to a tunnel, then the method may omit transmitting a signal to the second vehicle because the driver has forgotten to switch on the lights in the tunnel. Instead, the first vehicle may simply be operated with the provided control instruction, e.g., keep a greater distance from the second vehicle.

In another example, the method may include determining a lighting of the environment and the control instruction may be provided further based on the lighting of the environment. For example, in case of driving in the city or on a well-illuminated road, e.g., illuminated by streetlights, the insufficient vehicle lighting will be less of a problem than driving in the countryside without any or limited lighting of the environment. For the first case, the control instruction for adapting the driving of the first vehicle may have less of an extend than in the second case, where the extent may be much greater, e.g., in the form of pulling over by the first vehicle to let the second vehicle pass or overtaking the second vehicle, depending on the situation.

In another example, the method may include determining a lighting of one or more other vehicles, e.g., a third, fourth and/or further vehicles, and the control instruction may be provided further based on the lighting of the one or more other vehicles. For example, in case the first vehicle is driving ahead of the second vehicle with insufficient vehicle lighting, in case there is a third vehicle driving behind the second vehicle, the first vehicle may be able to detect the indirect light on the road from the third vehicle, thereby assuring that the situation is safer than without any third vehicle behind the second vehicle because the third vehicle illuminates the second vehicle and potentially provides illumination for the second vehicle. Hence, the extent of the adapting of the driving when executing the control instruction may be less than without the additional lighting of the third vehicle.

According to a second aspect, there is provided a computer program product comprising instructions which, when executed by a computer, cause the computer to carry out the method of the first aspect of this disclosure. The computer program product may be a computer program as such, or a computer readable medium having stored the computer program thereon.

According to a third aspect, there is provided a data processing device comprising means for carrying out the method of the first aspect of this disclosure.

According to a fourth aspect, there is provided a vehicle comprising at least one of the computer program product of the second aspect of this disclosure or the data processing device of the third aspect of this disclosure.

It is noted that the above examples may be combined with each other irrespective of the aspect involved. Accordingly, the method may be combined with structural features and, likewise, the computer program product, the data processing device, and the vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of a method for adapting driving of a first vehicle based on insufficient vehicle lighting of a second vehicle;
- Figure 2: shows a schematic illustration of the first vehicle;
- Figure 3: shows a schematic illustration of a driving scenario; and
- Figure 4: shows a schematic illustration of possible communications between vehicles.

### DETAILED DESCRIPTION

The Figures are merely schematic representations and serve only to illustrate examples of the disclosure. Identical or equivalent elements are in principle provided with the same reference signs.

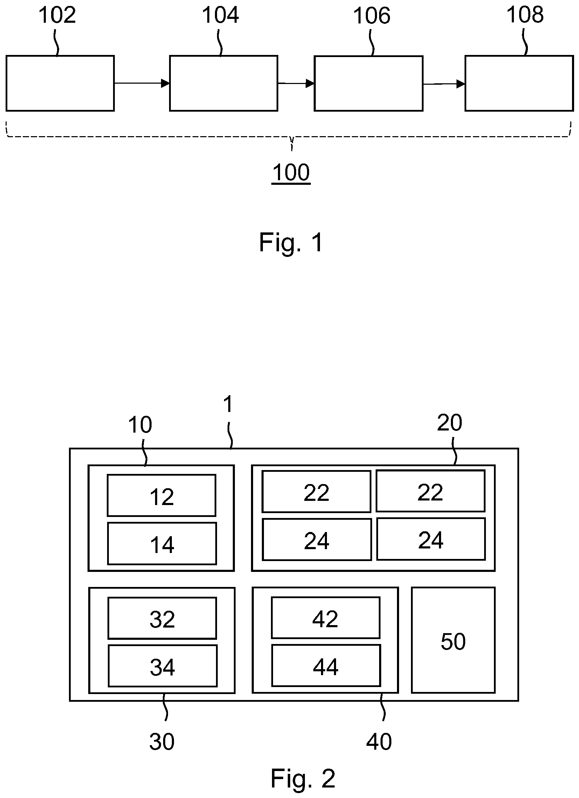

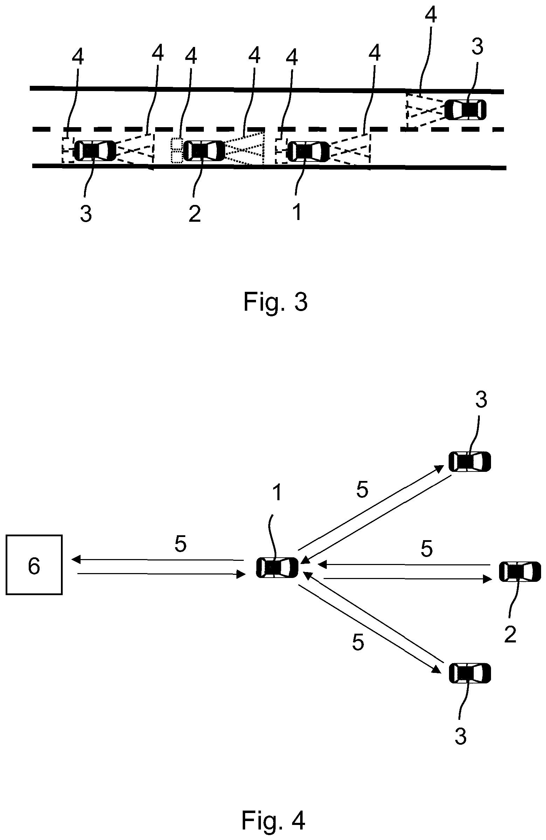

Figure 1 shows a schematic illustration of a method 100 for adapting driving of a first vehicle 1 based on an insufficient vehicle lighting 4 of a second vehicle 2 as exemplary shown in the driving scenario illustrated schematically in Fig. 3 under dark conditions, e.g., at night. The first vehicle 1 may be also referred to herein as an ego vehicle. The ego vehicle may carry out the method 100 as further described herein.

Figure 2 shows a schematic illustration of the components or systems of the first vehicle 1. The first vehicle 1 may comprise a detection system 10 for detecting its environment. For example, the detection system 10 of this example comprises a camera system 12 with one or more camera units for taking images and/or videos of the environment of the first vehicle 1, e.g., of the front of the second vehicle 2 driving behind the first vehicle 1 in the driving scenario of Fig. 3. Optionally, the detection system 10 may comprise any further system such as the herein exemplary shown radar and/or LiDAR system 14. Further, the first vehicle 1, such as any other vehicle, i.e., the second vehicle 2 and any further vehicles 3 as shown in Fig. 3, may comprise a vehicle lighting system 20 comprising several vehicle lights. In this case, exemplary, the most important vehicle lights in the form of a right headlight 22, a left headlight 24, a right rear light 26 and a left rear light 28 are depicted schematically.

In this exemplary case, the first vehicle 1 may be configured as an at least partially autonomous or fully autonomous vehicle 1. As such, the first vehicle 1 may comprise a system for autonomous driving 30, which may comprise one or several functions or assistants for autonomous driving. Merely as an example, a cruise control 32 and a lane change assistant 34 are shown as autonomous functions provided by the system 30. Further, the first vehicle 1 may comprise a data processing system 40 comprising a computer program product 42 and a data processing device 44. The system for autonomous driving 30 may be at least partially implemented in software and executed separate from the data processing system 40 or by the data processing system 40, for example, or any other data processing system of the vehicle 1. When the instructions stored on the computer program product 42 are executed by the data processing device 44, the first vehicle 1 may carry out the method 100 as explained further herein.

In a step 102 of method 100, the data processing device 44 may obtain data indicative of the vehicle lighting 4 of the second vehicle 2 as shown in Fig. 3. The vehicle lighting or, in other words, illumination is the exterior lighting or illumination of a vehicle. Specifically, the data may be determined by the detection system 10 and provided to the data processing device 44, thereby being obtained there. For example, the camera system 12 may capture one or more images of the second vehicle 2, specifically its front, and thereby of its headlights 22, 24 and their operation, i.e., their vehicle lighting. In the one or more images, the vehicle lighting in a dark environment will typically appear as brightest pixels.

In a step 104 of method 100, the data processing device 44 may determine whether the vehicle lighting 4 of the second vehicle 2 is sufficient or insufficient based on the data, in particular based on computer vision, which may mean that the one or more images are processed by computer vision such that the brightest pixels are logically assessed or understood and the vehicle lighting of the second vehicle 2 can be analyzed in terms of its sufficiency. In this case, as shown by the dotted lines of the vehicle lighting 4 in the front as well as the back of the second vehicle 2, compared to the dashed lines of the vehicle lightings 4 of the other vehicles 1, 3, the vehicle lighting 4 is exemplary insufficient because its lighting intensity is lower than a threshold set by data processing device 44.

Then, in step 106 of method 100, the data processing device 44 may provide a control instruction for adapting the driving of the first vehicle 1 based on the insufficient vehicle lighting of the second vehicle 2. Specifically, an extent of the adapting of the driving of the first vehicle 1 may be based on a level of insufficiency of the vehicle lighting 4 of the second vehicle 2 as may be determined in step 104. Hence, this control instruction may be provided, in particular specifically determined for the present case of the driving situation taking into account the vehicle lighting 4 of the second vehicle 2 and the positioning of the first vehicle 1 relative to the second vehicle 2 or generally the driving situation and any other vehicles 3 in the environment, e.g., as may be determined by the radar and/or LiDAR system 14.

The control instruction may be provided to the system for autonomous driving 30 or for manual execution by a human driver of the first vehicle 1, for example. Consequently, the control instruction may be carried out in step 108 of the method 100, e.g., by the system for autonomous driving 30. For example, the adapting of the driving of the first vehicle 1 in the driving scenario of Fig. 3 may be that the first vehicle 1 accelerates to increase its distance to the second vehicle 2, thereby ensuring that the second vehicle 2 does not hit the first vehicle 1 due to limited visibility when accelerating. However, generally, different driving actions may be considered, and the control instruction may select one of different driving actions to be carried out, which may correspond to the previously mentioned extent of the adapting of the driving of the first vehicle 1 and may further comprise an extent of the selected driving action itself, e.g., how strong the first vehicle 1 accelerates in the example of Fig. 3.

In Fig. 3, other vehicles 3 are present in the driving situation on the road. The first vehicle 1 may also carry out the method 100 for the other vehicle 3 approaching the first vehicle 1 on the opposite lane. However, in this example, the vehicle lighting 4 of that vehicle 3 is sufficient as seen from the front of the first vehicle 1. Moreover, the other vehicle 3 driving behind the second vehicle 2 may also have sufficient vehicle lighting and thereby illuminate the second vehicle 2, which may reduce the risk involved with the insufficient vehicle lighting of the second vehicle 2. This may be detected by the first vehicle 1 and, accordingly, the extent of the adapting of the driving may be determined lower than without such other vehicle 3 illuminating the second vehicle 2.

Further, as shown in Fig. 2, the first vehicle 1 may have a communication system 50. The communication system 50 may be configured for wireless communication via a cellular connection, Wi-Fi connection, Bluetooth connection and/or similar. Any wireless communication or connection technology may be used. For example, the communication system 50 may accordingly comprise a transmitter, receiver and/or a transceiver, e.g., with an antenna. Similarly, any of the second vehicle 2 and the other vehicles 3 may comprise such communication system 50. By means of the communication system 50, the first vehicle 1 may exchange signals or data with the second vehicle 2, the other vehicles 3 and/or a server 6 as shown schematically in Fig. 4 by means of respective connections 5 between the respective entities.

The communication through any of the connections 5 may be advantageous in several cases, one example of which is that the other vehicle 3 behind the second vehicle 2 may transmit the data indicative of the rear vehicle lighting 4 of the second vehicle 2 to the first vehicle 1. Thereby, the first vehicle 1 may determine insufficiency or sufficiency of the overall vehicle lighting 4 of the second vehicle 2 rather than merely the front vehicle lighting 4 as may be seen by its camera system 12. Another example is that the first vehicle 1 may notify the other vehicle 3 approaching the first vehicle 1 about the insufficient vehicle lighting 4 of the second vehicle 2 by transmitting a signal thereto such that the other vehicle 3 is aware of the potentially dangerous situation and may correspondingly react with its own driving actions. Yet another example is that the first vehicle 1 may send such signal to the second vehicle 2 itself, thereby informing it about its insufficient vehicle lighting 4. Hence, the driver of the second vehicle 2 may be informed and switch on the vehicle lights 22, 24, if they are turned off, or, in case of a malfunction, reduce speed, stop or drive to the nearest repair shop. Moreover, the first vehicle 1 may communicate with the server 6, e.g., to send an image of the second vehicle 2 thereto and consequently to determine a vehicle model of the second vehicle 2 and to determine a specification of the vehicle lighting 4 for the determined vehicle model. Hence, the first vehicle 1 will know how the vehicle lighting 4 for that particular vehicle model is supposed to look like and whether the vehicle lighting 4 is insufficient or not based on a comparison with its specification.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of', in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]".

Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

Any designation of methods, steps and elements as first, second, etc. or similar as provided herein is merely intended to make the methods, their steps and elements referenceable and distinguishable from one another. By no means does the designation of methods, steps and elements constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the examples of the disclosure described herein are capable of operation in other sequences than described or illustrated herein.

In the context of the present disclosure any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope of the claims.

### LIST OF REFERENCE SIGNS

- 1: first vehicle
- 2: second vehicle
- 3: further vehicles, other road users
- 4: vehicle lighting
- 5: communication
- 6: server
- 10: detection system
- 12: camera system
- 14: radar and/or LiDAR system
- 20: vehicle lighting system
- 22: right headlight
- 24: left headlight
- 26: right rear light
- 28: left rear light
- 30: system for autonomous driving
- 32: cruise control
- 34: lane change assistant
- 40: data processing system
- 42: computer program product
- 44: data processing device
- 50: communication system
- 100: method
- 102 - 108: steps

## Claims

1. A method (100) for adapting driving of a first vehicle (1) based on an insufficient vehicle lighting (4) of a second vehicle (2), the method (100) comprising:
- obtaining data indicative of the vehicle lighting (4) of the second vehicle (4),
- determining that the vehicle lighting (4) of the second vehicle (2) is insufficient based on the data, and
- providing a control instruction for adapting the driving of the first vehicle (1) based on the insufficient vehicle lighting (4) of the second vehicle (2).

2. The method (100) of claim 1, the data comprising one or more images of the second vehicle (2), and the determination of the insufficient vehicle lighting (4) being based on computer vision.

3. The method (100) of claim 1 or 2, the determining of the insufficient vehicle lighting (4) comprising determining a level of insufficiency of the vehicle lighting (4), an extent of the adapting of the driving of the first vehicle (1) being based on the level of insufficiency of the vehicle lighting (4) of the second vehicle (2).

4. The method (100) of claim 3, the level of insufficiency of the vehicle lighting (4) relating to a lighting intensity of the vehicle lighting (4), and the extent of the adapting of the driving relating to a selection of one or more driving actions from a number of different driving actions and/or selection of a severity of the driving action.

5. The method (100) of any one of the previous claims, the data being indicative of a road illumination by the vehicle lighting (4) of the second vehicle (2), the insufficient vehicle lighting (4) being determined based at on the road illumination by the vehicle lighting (4) of the second vehicle (2).

6. The method (100) of any one of the previous claims, the insufficient vehicle lighting (4) being determined based on a comparison of the lighting intensity and/or lighting area of vehicle lights of the same kind with one another, the vehicle lights of the same kind being from the vehicle lighting (4) of the second vehicle (2).

7. The method (100) of any one of the previous claims, the data being indicative of different lighting operations and/or a continuous operation of the vehicle lighting (4) of the second vehicle (2), the vehicle lighting (4) of the second vehicle (2) being determined insufficient if the vehicle lighting (4) is indicative of a malfunction in any of the different lighting operations and/or if an intensity of the vehicle lighting (4) varies during the continuous operation.

8. The method (100) of any one of the previous claims, the method (100) further comprising:
- providing a signal indicative of the insufficient vehicle lighting (4) for transmission to the second vehicle (2), a server (6) and/or other road users (3).

9. The method (100) of any one of the previous claims, the method (100) further comprising:
- providing a second control instruction for at least partially adapting a vehicle lighting (4) of the first vehicle (1) and/or for emitting a first vehicle sound based on the insufficient vehicle lighting (4) of the second vehicle (2).

10. The method (100) of any one of the previous claims, the method (100) further comprising:
- determining different types and/or locations of vehicle lights of the vehicle lighting (4) of the second vehicle (2) based on the data, the different types and/or locations of vehicle lights being classified as having a different relevance for traffic safety,
the insufficiency of the vehicle lighting (4) of the second vehicle (2) being determined separately for each one of the different types of vehicle lights, and an extent of the adapting of the driving of the first vehicle (1) being based on the insufficiency of each one of the different types of vehicle lights and the classification of the different types and/or locations of the vehicle lights.

11. The method (100) of any one of the previous claims, the method (100) further comprising:
- determining a vehicle model of the second vehicle (2), and
- determining a specification of the vehicle lighting (4) for the determined vehicle model, the determining that the vehicle lighting (4) of the second vehicle (2) is insufficient being based on the data and the determined specification of the vehicle model.

12. The method (100) of any one of the previous claims, the method (100) further comprising:
- determining a darkness level of the environment of the first vehicle (1), and
- determining a participation of the second vehicle (2) in road traffic,
the data being obtained if the determined darkness level meets a darkness threshold and the second vehicle (2) is determined to participate in the road traffic.

13. A computer program product (42) comprising instructions which, when executed by a computer, cause the computer to carry out the method (100) of any one of the claims 1 to 12.

14. A data processing device (44) comprising means for carrying out the method (100) of any one of the claims 1 to 12.

15. A vehicle (1) comprising at least one of the computer program product (42) of claim 13 or the data processing device (44) of claim 14.
